# EUROPEAN PATENT SPECIFICATION

(11) **EP 3 203 627 B1**
(45) Date of publication and mention of the grant of the patent: **20.12.2023**
(21) Application number: 14902952.2
(22) Date of filing: 01.10.2014
(51) Int. Cl.: H02P 3/18, H02P 29/024, G05B 9/03

(54) **POWER CONVERSION DEVICE, POWER CONVERSION METHOD, AND POWER CONVERSION SYSTEM**
STROMWANDLUNGSVORRICHTUNG, STROMWANDLUNGSVERFAHREN UND STROMWANDLUNGSSYSTEM
DISPOSITIF DE CONVERSION D'ÉNERGIE, PROCÉDÉ DE CONVERSION D'ÉNERGIE ET SYSTÈME DE CONVERSION D'ÉNERGIE

(43) Date of publication of application: 09.08.2017
(73) Proprietor: Hitachi Industrial Equipment Systems Co., Ltd., Tokyo 101-0022 (JP)
(72) Inventor: YAMAZAKI Masahiro, Tokyo 100-8280 (JP); ARAO Yusuke, Tokyo 101-0022 (JP); TANAKA Makoto, Tokyo 101-0022 (JP); MOCHIZUKI Yoshinori, Tokyo 100-8280 (JP)
(74) Representative: MERH-IP Matias Erny Reichl Hoffmann Patentanwälte PartG mbB
(86) International application number: PCT/JP2014/076238
(87) International publication number: WO 2016/051552

(56) References cited:
- EP-A1- 1 344 676
- EP-A2- 2 367 086
- EP-A2- 2 541 349
- DE-A1-102008 014 495
- JP-A- H05 316 743
- JP-A- H09 215 388
- JP-A- 2004 062 652
- JP-A- 2008 178 236
- JP-A- 2011 008 642
- JP-A- 2011 008 642
- JP-A- 2011 229 359

## Description

### [Technical Field]

This invention relates to a power conversion apparatus, a power conversion method, and a power conversion system for driving and controlling a motor or the like.

### [Background Art]

Conventionally, a power conversion system in which a power conversion apparatus that controls the speed of a motor and a safety module that executes a safety function such as emergency shutdown are integrated has been proposed (for example, PTL 1).

A safety device and power converter are known, wherein it is determined whether a safety function unit having a safety function of a desired standard is correctly mounted in the safety device having a configuration in which a basic control function and safety function are separated (for example, PTL 2).

Further, a controller for an electric automobile is known, wherein the control device of the electric car in which any two of control devices fixed to the corresponding electric motors send signals to each other and send and receive control information by taking a bypass route when any one of transmission lines malfunctions (for example, PTL 3).

Moreover, an inverter system having a safety module is known, wherein the inverter system is provided with a communication function carrying out transmission and reception of communication data with an external controller through a network and a safety function established by the communication data (for example, PTL 4) .

### [Citation List]

### [Patent Literature]

[PTL 1]
   Japanese Patent Application Publication No. 2011-229359
[PTL 2]
   Japanese Patent Application Publication No. 2011-008642
[PTL 3]
   European Patent Application EP 1 344 676 A1
[PTL 4]
   European Patent Application EP 2 541 349 A2

### [Summary of Invention]

### [Technical Problem]

In the system disclosed in PTL 1, a safety module is always necessary to execute a safety function. However, the safety module has a problem that the component cost and the development cost for realizing the safety function are expensive and the product price increases.

Particularly, in order to acquire certification of the functional safety standards IEC 61508, it is necessary to use long-life components as components that form a device or make components redundant to reduce a failure rate of the device. Furthermore, when the safety function is realized using software, a development process starting from development planning to formulation of specifications, implementation, test, and operation is thoroughly managed to prevent the inclusion of bugs of the software. Therefore, the development cost increases. In the functional safety standards IEC 61800-5-2 for a motor controlling apparatus of an inverter, a servo motor, and the like, various safety functions such as a function (STO: Safe torque off) of cutting off torque to a motor and a function (SS1: Safe stop 1) of executing STO after decelerating and stopping the motor are defined. In general, although STO can be realized with hardware only, software-based control is required to realize SS1. As a result, the development cost increases. Therefore, an object of the present invention is to provide a power conversion apparatus capable of allowing a safety function to be executed in a main body of the power conversion apparatus and extending the safety function by attaching a safety module to the main body of the power conversion apparatus.

### [Solution to Problem]

A power conversion apparatus according to the present invention is described in claim 1, a power conversion system according to the present invention is described in claim 6, and a power conversion method according to the present invention is described in claim 7. Further preferred embodiments of the power conversion apparatus and the power conversion method are described in the dependent claims.

A power conversion apparatus which includes an inverter unit that converts a direct current to an alternating current and which variably controls the speed of a motor includes a gate drive unit that drives the inverter unit, a control unit that controls the gate drive unit, and a safety function unit that executes a safety function. The power conversion apparatus is realized by configuring the control unit and the safety function unit so as to be separated independently.

### [Advantageous Effects of Invention]

According to the present invention, it is possible to execute a safety function in a main body of the power conversion apparatus and extend the safety function by attaching a safety module to the main body of the power conversion apparatus.

Other problems, structures, and effects will be apparent from the following description of embodiments.

### [Brief Description of Drawings]

[Fig. 1(a)]

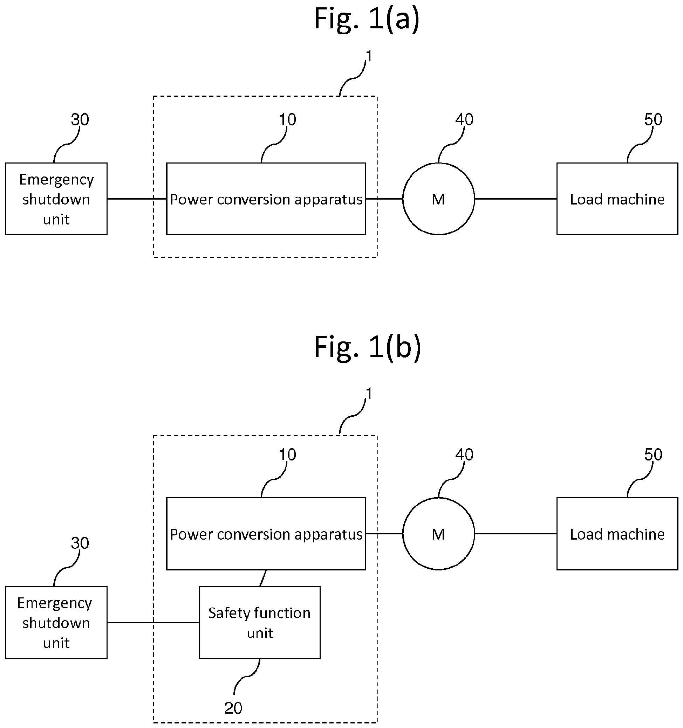

   Fig. 1(a) is a block diagram illustrating an example of a functional configuration when operated by a power conversion apparatus according to Embodiment 1.
[Fig. 1(b)]
   Fig. 1 (b) is an example of a block diagram illustrating a functional configuration when operated by connecting to a safety function unit according to Embodiment 1.
[Fig. 2] Fig. 2 is an example of a diagram illustrating a configuration of the power conversion apparatus and the flow of data according to Embodiment 1.
[Fig. 3]

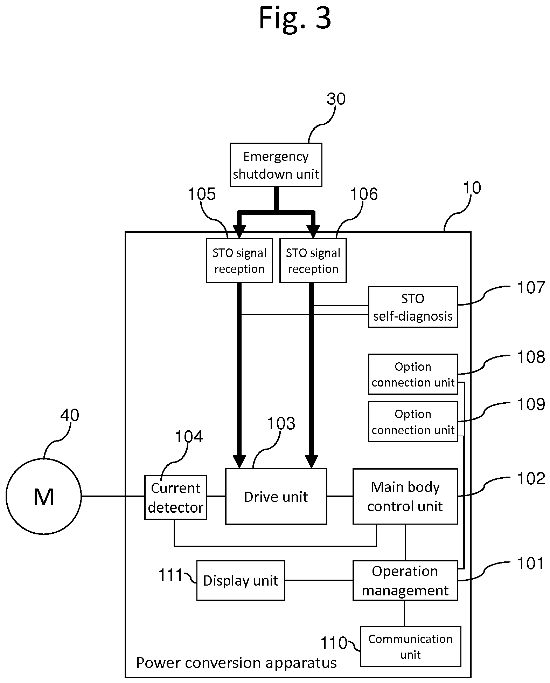

   Fig. 3 is an example of a diagram illustrating the flow of data when the power conversion apparatus stops emergently according to Embodiment 1.
[Fig. 4]

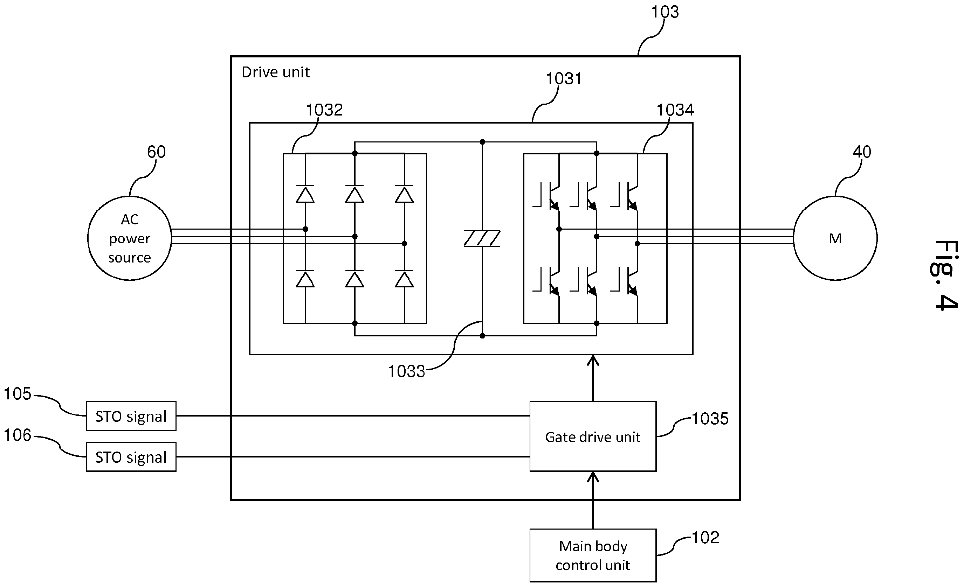

   Fig. 4 is an example of a diagram illustrating a configuration of a drive unit included in the power conversion apparatus according to Embodiment 1.
[Fig. 5]

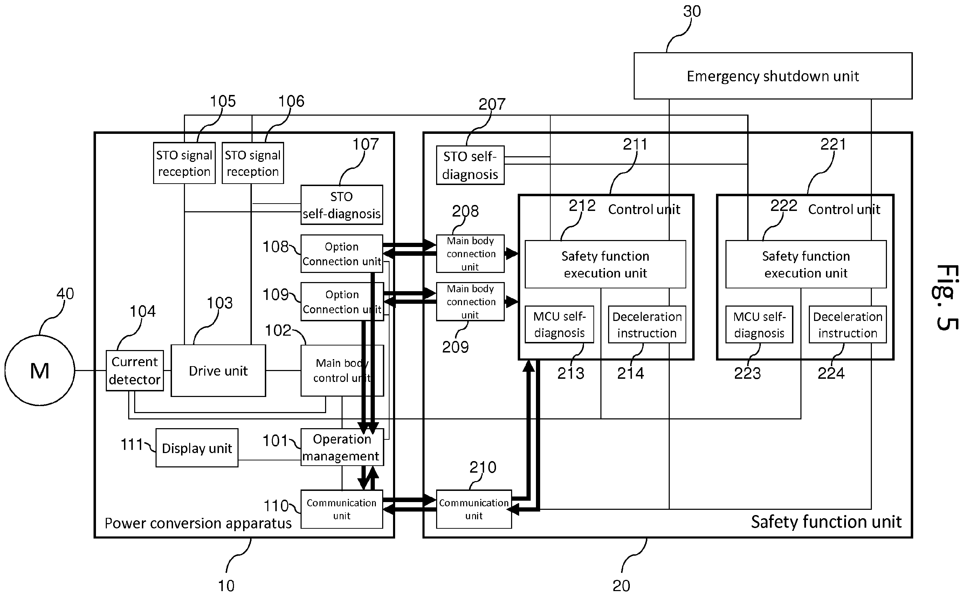

   Fig. 5 is an example of a diagram illustrating a configuration of the power conversion apparatus and the safety function unit and the flow of data during connection according to Embodiment 1.
[Fig. 6]

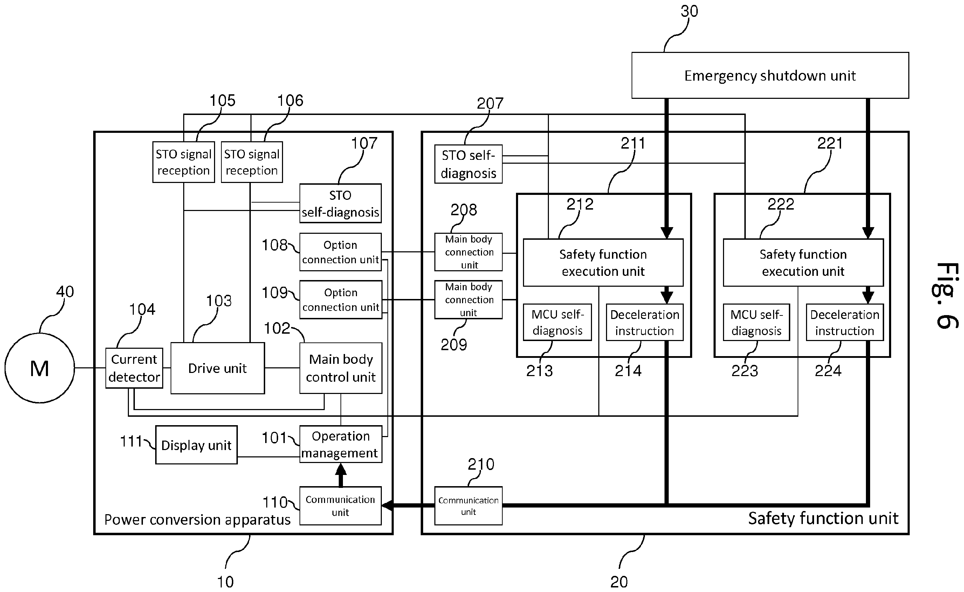

   Fig. 6 is an example of a diagram illustrating the configuration of the power conversion apparatus and the safety function unit and the flow of data during reception of an emergency shutdown signal according to Embodiment 1.
[Fig. 7]

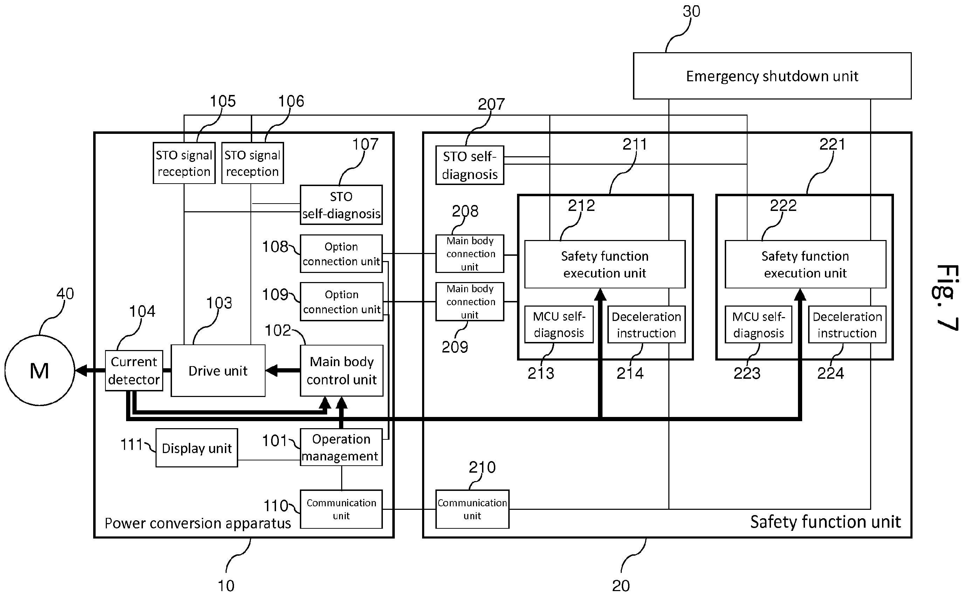

   Fig. 7 is an example of a diagram illustrating the configuration of the power conversion apparatus and the safety function unit and the flow of data during deceleration of a motor according to Embodiment 1.
[Fig. 8]

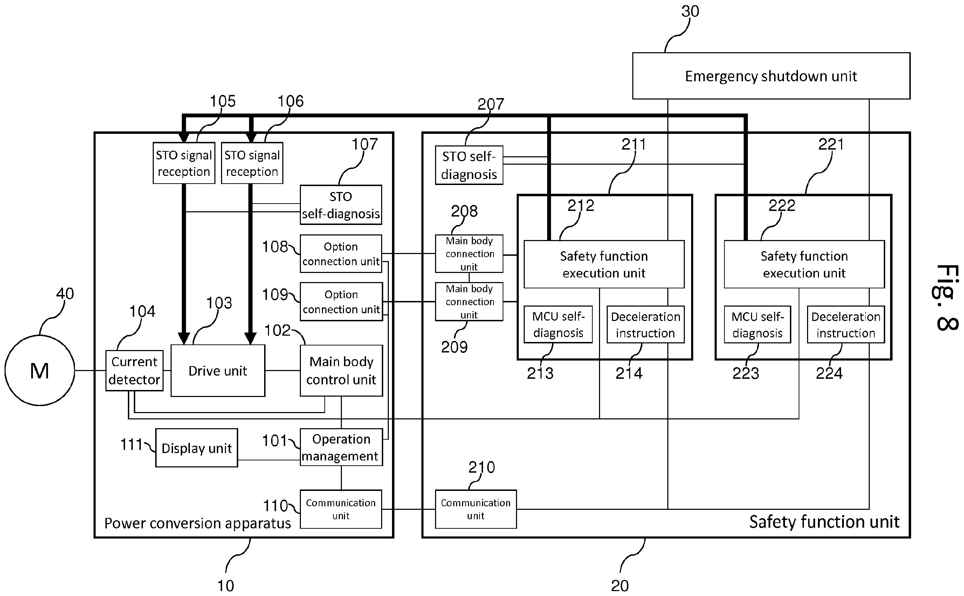

   Fig. 8 is an example of a diagram illustrating the configuration of the power conversion apparatus and the safety function unit and the flow of data when the motor is stopped according to Embodiment 1.
[Fig. 9]

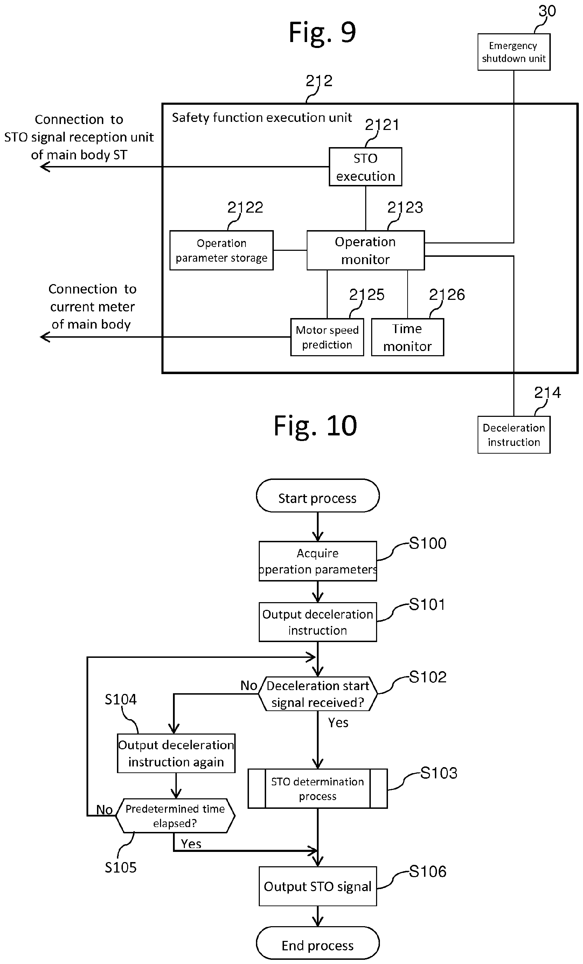

   Fig. 9 is an example of a diagram illustrating a configuration of a safety function execution unit according to Embodiment 1.
[Fig. 10]
   Fig. 10 is an example of a flowchart of a process according to Embodiment 1.
[Fig. 11]

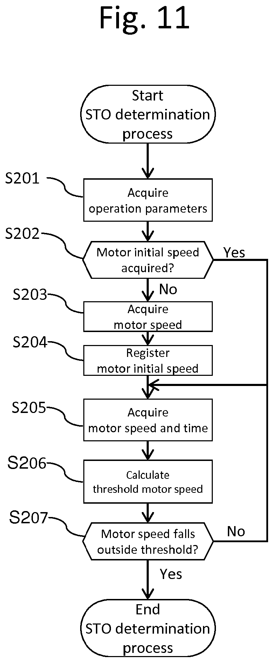

   Fig. 11 is an example of a flowchart of an STO determination process according to Embodiment 1.
[Fig. 12]

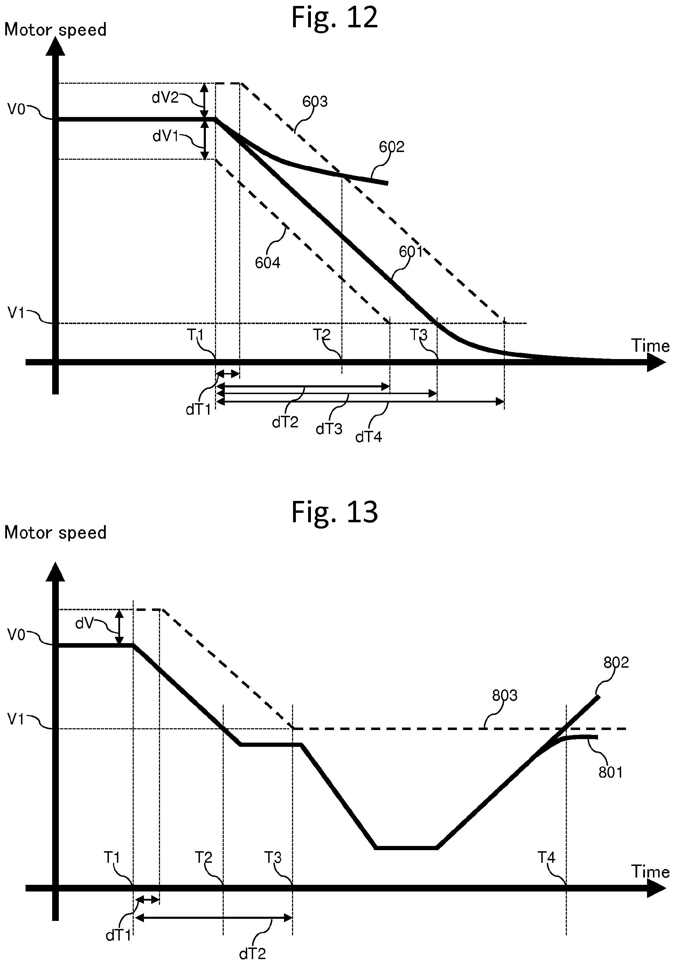

   Fig. 12 is a diagram for describing an SS1 operation according to Embodiment 1.
[Fig. 13]
   Fig. 13 is a diagram for describing an SLS operation according to Embodiment 1.
[Fig. 14]

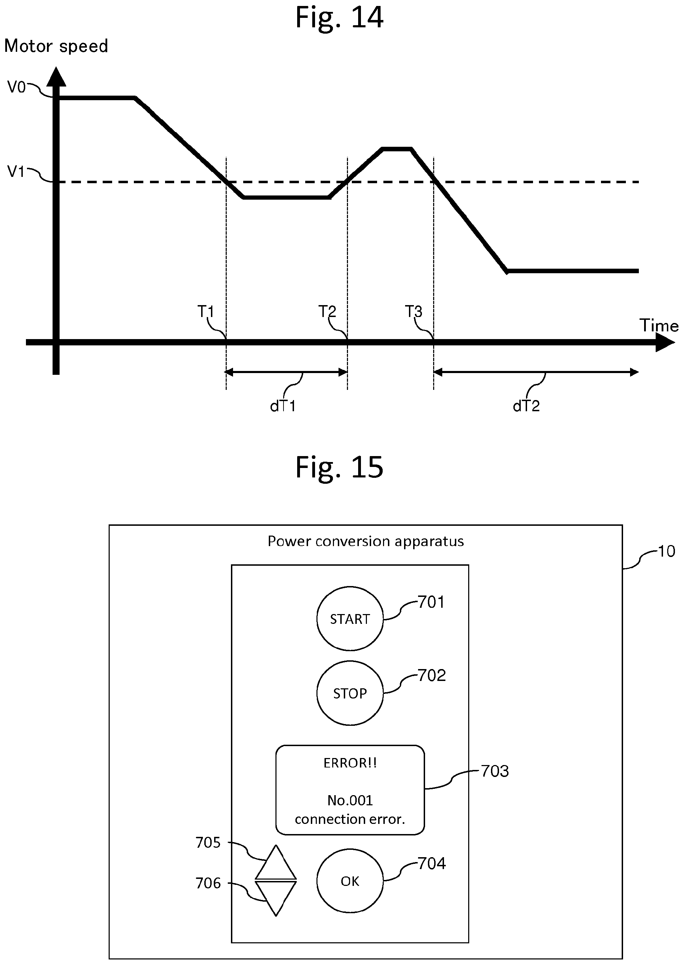

   Fig. 14 is a diagram for describing an SSM operation according to Embodiment 1.
[Fig. 15]
   Fig. 15 is a diagram illustrating a display example of an operation unit and a display unit mounted on the power conversion apparatus according to Embodiment 1.
[Fig. 16]

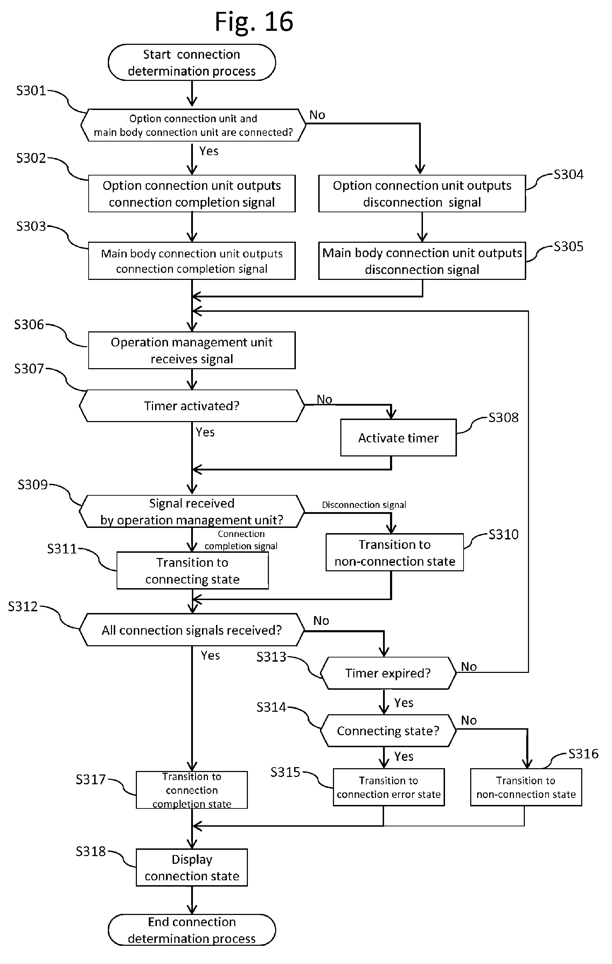

   Fig. 16 is an example of a flowchart for describing a process of connecting the power conversion apparatus and the safety function unit according to Embodiment 1.
[Fig. 17]

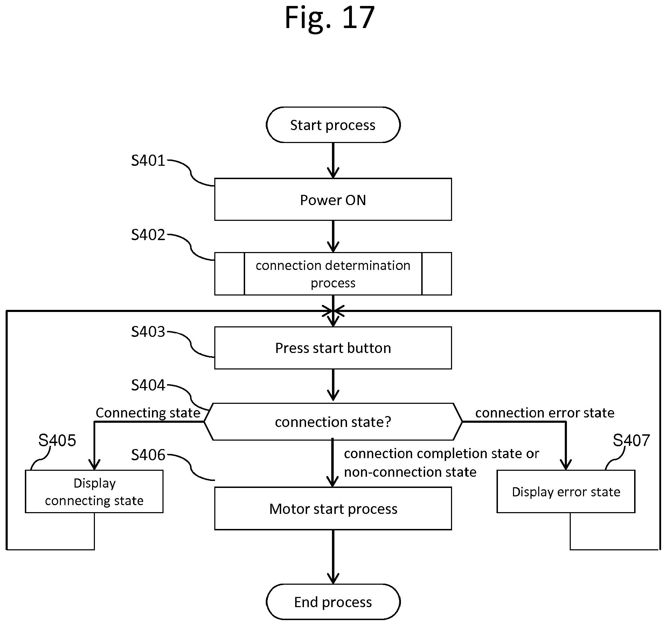

   Fig. 17 is an example of a flowchart until the motor starts operating after the power conversion apparatus and the safety function unit are turned on according to Embodiment 1.
[Fig. 18]

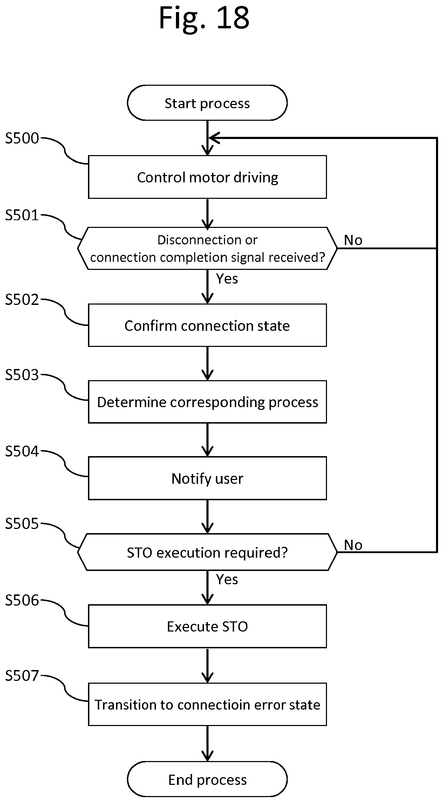

   Fig. 18 is an example of a flowchart when the safety function unit is connected or disconnecter when the power conversion apparatus operates the motor according to Embodiment 1.
[Fig. 19(a)]

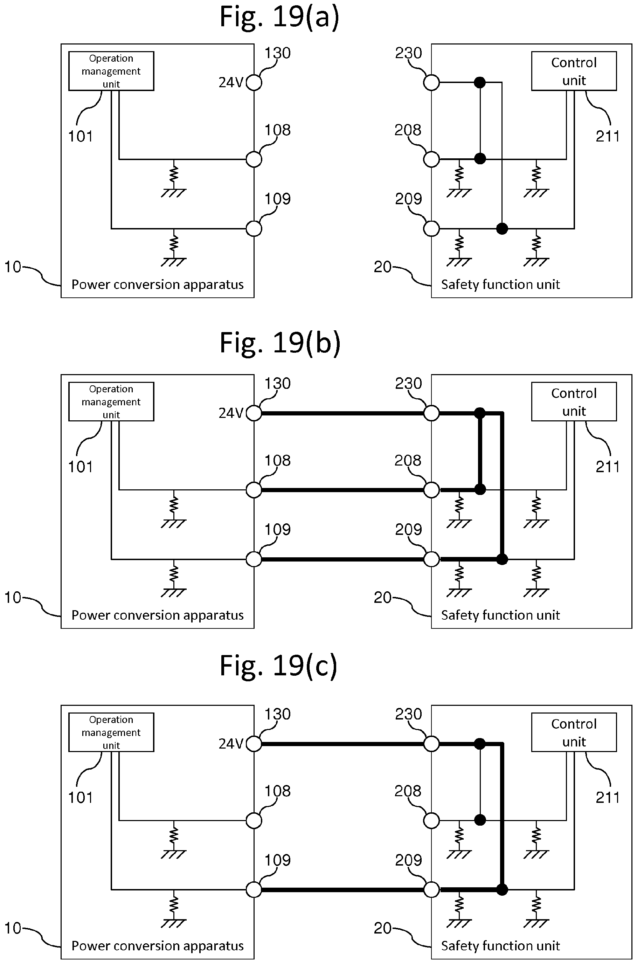

   Fig. 19(a) is a circuit diagram illustrating a state in which the power conversion apparatus and the safety function unit are not connected according to Embodiment 1.
[Fig. 19(b)]
   Fig. 19(b) is a circuit diagram illustrating a state in which the power conversion apparatus and the safety function unit are connected according to Embodiment 1.
[Fig. 19(c)]
   Fig. 19(c) is a circuit diagram illustrating a state in which an option coupling unit and a main body connection unit are not connected according to Embodiment 1.

### [Description of Embodiments]

### [Embodiment 1]

Fig. 1 (a) is a block diagram illustrating an example of a functional configuration when operated by a power conversion apparatus according to Embodiment 1.

The same constituent elements in the respective drawings will be denoted by the same reference numerals. Moreover, the embodiments to be described below are not limited to the illustrated examples. Fig. 1(a) includes a power conversion apparatus 10, an emergency shutdown unit 30, a motor 40, and a load machine 50.

The motor 40 is a device that converts electrical energy to mechanical energy and is a three-phase alternating current motor or the like, for example.

The load machine 50 is a constituent element of an industrial machine such as an elevator or a machining tool, for example, and is connected to and driven by the motor 40.

The emergency shutdown unit 30 is a unit that outputs an emergency shutdown signal for putting the load machine 50 into a safe state. For example, the emergency shutdown unit 30 is an emergency shutdown switch that outputs an emergency shutdown signal when pressed by an operator or the like who operates the load machine 50 or a light curtain or a safety door lock that detects approach of a person to the load machine 50 or opening of a no-entry door to output an emergency shutdown signal. Moreover, the emergency shutdown unit 30 may be a safety relay, a safety PLC, or the like that is used by being connected to these apparatuses to output an emergency shutdown signal upon receiving a notification of emergency from the devices. The emergency shutdown signal is one of safety request signals for requesting execution of the safety function defined in the international standards IEC 61800-5-2.

The power conversion apparatus 10 is an apparatus that controls the driving of the motor 40. The detailed configuration thereof will be described later. The power conversion apparatus 10 stops the motor 40 upon receiving an emergency shutdown signal from the emergency shutdown unit 30.

Fig. 1 (b) is an example of a block diagram illustrating a functional configuration when operated by being connected to a safety function unit according to Embodiment 1.

A safety function unit 20 operates by being connected to the power conversion apparatus 10 and outputs a control signal to the power conversion apparatus 10 so as to execute a safety function of decelerating and stopping the motor 40 or maintaining the speed at a predetermined speed as well as emergency shutdown of the motor 40. The detailed configuration thereof will be described later. As described above, the power conversion apparatus 10 can control the motor 40 and execute the safety function by itself and can execute a more advanced safety function when the safety function unit 20 is connected thereto.

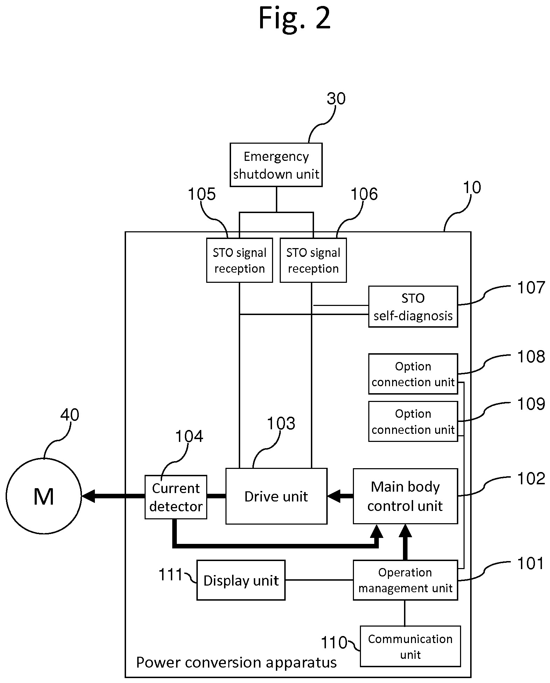

Fig. 2 is an example of a diagram illustrating a configuration of the power conversion apparatus and the flow of data according to Embodiment 1. In Fig. 2, the flow of signals in a normal state in which the motor 40 is driven according to an operation pattern stored in an operation management unit 101 is illustrated by arrows.

The power conversion apparatus 10 includes the operation management unit 101, a main body control unit 102, a drive unit 103, a current detector 104, STO signal reception units 105 and 106, an STO self-diagnosis 107, option connection units 108 and 109, a communication unit 110, a display unit 111, and so forth.

The operation management unit 101 outputs a speed instruction to the main body control unit 102 to control driving of the motor. For example, the operation management unit 101 comprises a central processing unit (CPU) and a program running on the CPU. Moreover, the operation management unit 101 outputs an instruction to notify the display unit 111 of the state of the power conversion apparatus 10 and outputs a communication instruction to the communication unit 110 when communicating with an external device.

The main body control unit 102 outputs a pulse width modulation (PWM) control signal to the drive unit 103. For example, the main body control unit 102 is a program running on the CPU.

The drive unit 103 is a unit that supplies electric power for applying torque to the motor 40, and the detailed configuration thereof will be described with reference to Fig. 4.

The current detector 104 is a detector that measures a current supplied from the drive unit 103 to the motor 40 and is formed of a hall element, for example.

The STO signal reception unit 105 is a terminal for receiving an emergency shutdown signal and transmits an emergency shutdown signal output from an emergency shutdown unit to the drive unit 103. The STO signal reception unit 106 is configured in a manner similar to the STO signal reception unit 105.

The STO self-diagnosis unit 107 diagnoses whether a signal will be transferred from the STO signal reception unit 105 to the drive unit 103. The STO self-diagnosis unit 107 transmits test pulses at a predetermined time interval and detects whether a signal has arrived at the drive unit 103. When the signal has not been arrived, the STO self-diagnosis unit 107 notifies the operation management unit 101 of occurrence of an error.

The option connection unit 108 is a terminal for coupling to the safety function unit 20. The option connection unit 108 outputs a connection completion signal when the option connection unit 108 is connected to the safety function unit 20 and outputs a disconnection signal when the option connection unit 108 is separated from the safety function unit 20. For example, specifically, outputting the connection completion signal means a state in which the terminal voltage of the option connection unit 108 increases (for example, 24 V or the like), and outputting the disconnection signal means a state in which the terminal voltage decreases (for example, 0 V or the like) . In a state in which the power conversion apparatus 10 is turned on, the operation management unit 101 can determine whether the option connection unit 108 is connected to the safety function unit 20 by acquiring the terminal voltage of the option connection unit 108.

The option connection unit 109 is configured in a manner similar to the option connection unit 108.

When the motor 40 is operated in the normal state, first, the operation management unit 101 transmits a target speed to the main body control unit 102 and the main body control unit 102 outputs a PWM control signal to the drive unit 103 according to the target speed. Moreover, the drive unit 103 supplies a PWM-controlled voltage for generating torque to the motor 40 and the motor 40 is driven. In this state, the current detector 104 measures the current supplied to the motor 40 and outputs the measured current to the main body control unit 102. The main body control unit 102 performs PWM control using the current acquired from the current detector 104.

Fig. 3 is an example of a diagram illustrating the flow of data when the power conversion apparatus stops emergently according to Embodiment 1. The flow of the process will be described with reference to Fig. 3.

First, the emergency shutdown unit 30 outputs an emergency shutdown signal to the STO signal reception unit. Subsequently, the STO signal reception unit having received the emergency shutdown signal outputs the emergency shutdown signal to the drive unit 103. Moreover, the drive unit 103 having received the emergency shutdown signal cuts off the PWM control signal with the aid of a gate drive unit 1035 illustrated in Fig. 4.

In this way, it is possible to cut off the supply of electric power to the motor 40.

Fig. 4 is an example of a diagram illustrating a configuration of a drive unit included in the power conversion apparatus according to Embodiment 1. A mechanism of driving and emergency shutdown of the motor 40 will be described with reference to Fig. 4.

The drive unit 103 includes the gate drive unit 1035, a rectifier circuit unit 1032, a direct current smoothing circuit unit 1033, and an inverter unit 1034.

The rectifier circuit unit 1032 is formed of a diode bridge, for example, and converts an alternating current voltage supplied from an external alternating current power source 60 to a direct current voltage.

The direct current smoothing circuit unit 1033 is formed of a capacitor, for example, and smoothes the direct current voltage converted by the rectifier circuit unit 1032.

The inverter unit 1034 is formed of six IGBTs (insulated gate bipolar transistors ), for example, and converts the direct current voltage smoothed by the direct current smoothing circuit unit 1033 to an alternating current voltage.

The gate drive unit 1035 is formed of a gate driver IC (integrated circuit), for example, and drives the IGBTs of the inverter unit 1034.

The main body control unit 102 outputs a PWM control signal to the gate drive unit 1035, and the gate drive unit 1035 outputs the received PWM control signal to the inverter unit 1034. The inverter unit 1034 generates an alternating current voltage which is PWM-controlled using the received PWM control signal and supplies the alternating current voltage to the motor 40. In this way, it is possible to control driving of the motor 40.

Moreover, the gate drive unit 1035 receives the emergency shutdown signal from the STO signal reception units 105 and 106. The gate drive unit 1035 having received the emergency shutdown signal cuts off the PWM control signal to be supplied to the inverter unit 1034. In this way, the PWM control of the voltage that the inverter unit 1034 supplies to the motor 40 is cut off, and torque of the motor 40 is not generated.

In this way, the drive unit 103 stops supply of torque to the motor 40 to stop the motor 40.

Fig. 5 is an example of a diagram illustrating the configuration of the power conversion apparatus and the safety function unit and the flow of data during connection according to Embodiment 1. The safety function unit 20 includes a communication unit 210, control units 211 and 221, safety function execution units 212 and 222, MCU self-diagnosis units 213 and 223, deceleration instruction units 214 and 224, main body connection units 208 and 209, and an STO self-diagnosis unit 207.

The communication unit 210 performs exchange of data between the safety function unit 20 and other information processing devices. The communication unit 210 is also used when exchanging information with the power conversion apparatus 10. Moreover, the communication unit 210 performs a communication process or the like for allowing the safety function unit 20 to access the Internet, other information processing devices, and the like. Moreover, it is not limited to a case in which only one communication unit 210 is used but a plurality of communication units may be provided to enable the use of a plurality of communication methods such as, for example Bluetooth, wireless LAN, code division multiple access (CDMA), and long term evolution (LTE: registered trademark). Moreover, the communication unit 210 and the communication unit 110 may be duplexed. When the communication units are duplexed, even when one of communication units fails, since communication is performed using the other communication unit, the safety of the device is improved.

The control unit 211 is comprises a CPU, for example, and performs a process such as management, calculation, and transmission and reception of data. The control unit 221 is configured in a manner similar to the control unit 211.

The safety function execution unit 212 monitors the speed of the motor 40 and receives a stop signal from the emergency shutdown unit to output an STO execution signal. The detailed configuration will be described with reference to Fig. 9. The safety function unit 222 is configured in a manner similar to the safety function execution unit 212.

The MCU self-diagnosis unit 213 diagnoses whether the control unit 211 operates normally. For example, the MCU self-diagnosis unit 213 periodically checks whether a program executed on the control unit 211 is hung up using a watchdog timer. The MCU self-diagnosis unit 223 is configured in a manner similar to the MCU self-diagnosis unit 213.

Upon receiving the emergency shutdown signal from the safety function execution unit 212, the deceleration instruction unit 214 outputs a deceleration instruction signal to the power conversion apparatus 10. The deceleration instruction unit 224 is configured in a manner similar to the deceleration instruction unit 214.

The main body connection unit 208 is a terminal for connectiong to the power conversion apparatus 10. The main body connection unit 209 is configured in a manner similar to the main body connection unit 208.

The STO self-diagnosis unit 207 diagnoses whether a signal will be transferred from the safety function execution unit 212 to the drive unit 103. The STO self-diagnosis unit 207 transmits test pulses at a predetermined time interval and detects whether a signal has arrived at the drive unit 103. When the signal has not been arrived, the STO self-diagnosis unit 207 notifies the operation management unit 101 of occurrence of an error.

Fig. 5 illustrates by arrows the flow of signals when the power conversion apparatus 10 and the safety function unit 20 are connected, and the flow of data during connection will be described with reference to this drawing.

First, when the option connection unit 108 of the power conversion apparatus 10 is connected to the main body connection unit 208 of the safety function unit 20, the option connection unit 108 and the main body connection unit 208 each output a connection completion signal. Moreover, the option connection unit 109 and the main body connection unit 209 each output a connection completion signal. The connection completion signals output from the option connection units 108 and 109 are transmitted to the operation management unit 101. Furthermore, the connectiong completion signal is transmitted to the control unit 211 via the communication units 110 and 210. Moreover, the connection completion signals output from the main body connection units 208 and 209 are transmitted to the control unit 211. Furthermore, the connection completion signals are transmitted to the operation management unit 101 via the communication units 210 and 110. In this way, connection completion signals output from the power conversion apparatus 10 and the safety function unit 20 are exchanged and four connection completion signals in total are output.

These connection completion signals are received by the operation management unit 101 and the control unit 211. When all connection completion signals could be received, it is determined that connection has been completed normally and a message showing that the safety function unit is normally connected is displayed on the display unit 111. If all connection completion signals could not be received, it is determined that a connection error has occurred, and a message showing a connection error is displayed.

The details of the option connection unit and the main body connection unit will be described with reference to Fig. 19. Fig. 19(a) illustrates a circuit diagram illustrating a state in which the power conversion apparatus 10 and the safety function unit 20 are not connected. The option connection units 108 and 109 are not connected to the safety function unit 20. Even when the power conversion apparatus 10 is turned on in this state, the terminal voltages of the option connection units 108 and 109 are low (for example, 0 V) . That is, a disconnection signal is output from the option connection units 108 and 109 and the operation management unit 101 receives the disconnection signal.

Fig. 19(b) illustrates a circuit diagram illustrating a state in which the power conversion apparatus 10 and the safety function unit 20 are connected. A terminal 130 is a terminal for supplying a voltage from the power conversion apparatus 10 to the safety function unit 20. The terminal 130 is connected to a terminal 230 of the safety function unit 20. Inside the safety function unit 20, the terminal 230 and the main body connection units 208 and 209 are electrically connected. Due to this, when the power conversion apparatus 10 is turned on in a state in which the option connection units 108 and 109 and the main body connection units 208 and 209 are connected, the voltages of the option connection units 108 and 109, and the main body connection units 208 and 209 increase (for example, 24 V) . That is, the connection completion signal is output.

The terminal 130, the terminal of the option connection unit 108, and the terminal of the option connection unit 109 may be collectively configured as one coupler.

Fig. 19(c) illustrates a circuit diagram illustrating a state in which the power conversion apparatus 10 and the safety function unit 20 are connected but the option connection unit 108 and the main body connection unit 208 are not connected due to a contact failure or the like. In this state, when the power conversion apparatus 10 is turned on, the voltages of the option connection unit 109 and the main body connection unit 209 increase (for example, 24 V) whereas the voltages of the option connection unit 108 and the main body connection unit 208 are low (for example, 0 V) . That is, a connection completion signal is output from the option connection unit 109 and the main body connection unit 209, and a disconnection signal is output from the option connection unit 108 and the main body connection unit 208.

In this way, since a connection state is detected by acquiring the voltages of the option conneciton unit and the main body connection unit, it is possible to immediately acknowledge a change in the connection state. Therefore, when it is determined that a failure has occurred, it is possible to immediately stop the motor and to secure the safety.

A connection switch button may be provided in the power conversion apparatus 10. The connection switch button is a button showing whether the safety function unit 20 is connected. For example, when a user connects the safety function unit 20, the user presses the connection switch button to explicitly notify the power conversion apparatus 10 of a fact that the safety function unit 20 is being connected. In this way, the power conversion apparatus 10 can acknowledge the connection state reliably and guarantee the safety. Moreover, the power conversion apparatus 10 may store the connection state in the operation management unit 101 or the like. In this way, when the operation management unit 10 checks the connection state, it is possible to check the connection state using connection information stored in the operation management unit 101 in addition to the connecftion completion signal or the disconnection signal output from the option connection units 108 and 109. Therefore, it is possible to guarantee the safety more reliably.

The details of the flow of a connection determination process of the power conversion apparatus 10 and the safety function unit 20 will be described with reference to Fig. 16.

First, when the option connection unit and the main body connection unit are connected (step S301: Yes), the option connection units 108 and 109 output connection completion signals (step S302), and the main body connection units 208 and 209 output connection completion signals (step S303). Here, when the option connection unit or the main body connection unit operates normally, four connection completion signals are output. When one of the option connection unit and the main body connection unit fails, not four connection completion signals are output. Moreover, when the option connection unit and the main body connection unit are not connected (step S301: No), the option connection units 108 and 109 output disconnection signals (step S304), and the main body coupling units 208 and 209 also output disconnection signals (step S305) .

Moreover, the operation management unit 101 receives the connection completion signal or the disconnection signal output from the option connection unit and the main body connection unit (step S306). Subsequently, confirmation is made on whether the timer has been activated (step S307) . When the timer is not activated (step S307: No), the timer is activated (step S308). This timer is used for measuring time when determining that a connection error has occurred if the operation management unit could not receive all connection completion signals within a predetermined period.

Confirmation is made on whether the operation management unit 101 has received the connection completion signal or the disconnection signal (step S309). When the connection completion signal is received (step S309: Connection completion signal), the connection state transitions to a connecting state (step S311). Here, the connecting state is one of the states held by the operation management unit 101 and is a state of waiting for a connection completion signal being output. For example, the state is held as a variable (for example, state) defined in an execution program and the value 1 of the variable state shows the connecting state. When the disconnection signal is received (step S309: Disconnection signal), the connecting state transitions to a non-connection state (step S310) . The non-connection state is a state showing that the safety function unit 20 is not connected to the power conversion apparatus 10. Unlike a connection error state, the power conversion apparatus 10 can start the operation of the motor in the non-connection state.

Subsequently, confirmation is made on whether all connection completion signals have been received (step S312). When all connection completion signals could be received (step S312: Yes), it is determined that connection has been performed normally and the connecting state transitions to a connection completion state (step S317). If all connection completion signals have not been received (step S312: No), confirmation is made on whether the timer has expired (step S313) . When the timer has not expired (step S313: No), the flow returns to step S306, and a process of receiving signals is executed.

When the timer has expired in a state in which all connection completion signals could not be received (step S313: Yes), confirmation is made on whether the state is the connecting state (step S314) . If the state is the connecting state (step S314: Yes), it is determined that a connection error has occurred, and the connecting state transitions to a connection error state (step S315) . Moreover, if the stateis not the connecting state (step S314: No), the non-connection state is maintained (step S316).

Subsequently, a content corresponding to the connection state is displayed on the display unit 111 (step S318). For example, a message "Connection has been completed normally" or the like is displayed when the connection state is the connection completion state whereas a message "Connection error has occurred" is displayed when the connection state is the connection error state. Moreover, the connection state may be displayed using LEDs or the like. Two different LEDs may be used: LEDs which are turned on when connection is completed normally and LEDs which are turned on when a connection error occurs. Or, the user may be notified by change in color of one LED that is turned on depending on the connection state. In this way, the user can immediately understand the connection state by seeing the LEDs and the safety is improved further.

Although not illustrated in Fig. 16, the control unit 211 also receives the connection completion signal and executes the same process as the operation management unit 101, thereby acknowledging whether connection has been performed normally or an error has occurred.

In the power conversion apparatus 10, the STO signal reception units 105 and 106 may have the functions of the option connection units 108 and 109. In this way, it is possible to reduce the number of components and to reduce the component cost.

The power conversion apparatus 10 and the safety function unit 20 are connected in a state both are turned off. When the user turns on both after connection is completed and then, presses an operation start button, the operation of the motor starts. In this case, the operation of the motor may start when connection is completed normally, and the motor is preferably not operated when a connection error occurs.

The flow of a process until the operation of the motor starts after the power conversion apparatus 10 and the safety function unit 20 are turned on will be described with reference to Fig. 17.

First, when the user turns on the power conversion apparatus 10 and the safety function unit 20 (step S401), a connection process described in Fig. 16 is executed (step S402). In this way, the connection state transitions to any one of the connection completion state, the connection error state, the connecting state, and the non-connection state. Subsequently, a start button is pressed by the user (step S403). Subsequently, the operation management unit 101 checks the connection state (step S404). When the connection state is the connection completion state or the non-connection state (step S404: "connection completion state or non-connection state"), an operation start process of the motor is performed (step S406) . Moreover, when the connection state is the connecting state (step S404: "connecting state"), the notice of the connenting state is displayed on the display unit 111 (step S405) and the state returns to a state of waiting for the pressing of the start button again. Moreover, when the connection state is the connection error state (step S404: "connection error state"), the notice of the connection error state is displayed on the display unit 111 (step S407) and the state returns to a state of waiting for the pressing of the start button again.

Moreover, when the motor operates in a state in which the safety function unit 20 is connected, if the disconnection is occurred due to a certain reason, it is preferable to immediately stop the operation of the motor. Conversely, when the motor is operated by the power conversion apparatus 10 solely without connecting the safety function unit 20, if the safety function unit 20 is connected, it is preferable to determine that this connection is unintended connection and to stop the operation of the motor immediately. The flow of the process of the power conversion apparatus 10 when disconnection or connection occurs during the operation of the motor will be described with reference to Fig. 18.

First, the operation management unit 101 outputs a speed instruction to the main body control unit 102 to control the driving of the motor (step S500).

Subsequently, confirmation is made on whether a disconnection signal showing that connection is released or a connection completion signal showing that connection is completed is output from the option connection units 108 and 109 (step S501). If the signal is not output (step S501: No), motor driving control is performed again (step S500). If the signal is output (step S501: Yes), the connection state is acquired and checked (step S502). Moreover, the content of a process to be executed is determined according to a combination of the type of signal and the connection state (step S503).

For example, when a disconnection signal is output in the connection completion state, it is determined that the safety function unit 20 is separated, a connection error has occurred, or malfunction has occurred, and it is necessary to put the motor into a safe state. Due to this, a notice to safely stop the motor is displayed and STO is executed so that the operation management unit instructs the main body control unit to stop the motor.

Moreover, when the connection completion signal is output in the non-connection state, it is determined that the safety function unit 20 is attached and a message that the safety function or the safety level is not improved although there is no influence on the operation of the motor even when the safety function unit 20 is attached during operation is displayed to notify the user of the same. In this case, STO may not be executed.

Moreover, when the connection completion signal is output in the connection completion state or the disconnection signal is output in the non-connection state, this combination of events does not occur if the apparatus operates normally. Therefore, it is determined that there is a possibility that the option connection units 108 and 109 fail, a message is displayed to inform the user of the possibility of failure, and STO is executed.

In this manner, for instance, the content to be displayed on the display unit 111 and whether to execute STO are determined based on a combination of the type of the signal output by the option connection units 108 and 109 and the connection state.

Moreover, if there is a content to be notified to the user, the content is displayed on the display unit 111 (step S504). After that, when it is necessary to execute STO (step S505: Yes), STO is executed (step S506) and the coupling state transitions to the coupling error state (step S507) . When it is not necessary to execute STO (step S505: No), motor driving control is performed again (step S500).

Next, the operation until a safe torque-off signal is input to the drive unit 103 after an emergency shutdown signal is output from the emergency shutdown unit will be described with reference to Figs. 6, 7, and 8.

First, an overview of the flow of a process when an emergency shutdown signal is output from the emergency shutdown unit and is notified to the power conversion apparatus will be described with reference to Fig. 6.

First, when an emergency shutdown signal is output from the emergency shutdown unit 30, the signal is input to the safety function execution units 212 and 222 and is output to the deceleration instruction units 214 and 224 with an operation parameter to be described later appended thereto. Moreover, the emergency shutdown signal is transmitted to the operation management unit 101 via the communication units 210 and 110. Next, the flow of a process in which the motor 40 is decelerated and the safety function execution unit monitors the speed of the motor 40 will be described with reference to Fig. 7.

Upon receiving a deceleration instruction, the operation management 101 issues a deceleration instruction to the main body control unit 102 together with a parameter such as a deceleration. In response to this, the main body control unit 102 outputs a PWM control signal to the drive unit 103 to decelerate the motor 40.

Moreover, the main body control unit 102 acquires a current value for predicting a motor speed output from the current detector 104. Furthermore, the safety function execution units 212 and 222 also acquire the current value from the current detector 104. Using this value, the safety function execution units 212 and 222 start monitoring the speed of the motor 40. After that, when the speed of the motor 40 exceeds a predetermined threshold, the safety function execution units 212 and 222 output a safe torque-off signal to the drive unit 103 via 105 and 106.

As illustrated in Fig. 8, the safe torque-off signal is input to the drive unit 103 via the STO signal reception units 105 and 106. Moreover, the drive unit 103 turns off torque generated in the motor 40.

In this way, it is possible to decelerate the speed of the motor 40 to stop the motor 40 when an emergency shutdown signal is output from the emergency shutdown unit and to extend the safety function. Here, a detailed configuration of the safety function execution unit 212 will be described with reference to Fig. 9. The safety function execution unit 222 is configured in a manner similar to the safety function execution unit 212.

The safety function execution unit 212 includes an STO execution unit 2121, an operation parameter storage unit 2122, an operation monitoring unit 2123, a motor speed predicting unit 2125, and a time monitoring unit 2126.

The STO execution unit 2121 is a terminal for connecting to the STO signal reception unit 105 of the power conversion apparatus and outputs a safe torque-off signal.

The operation parameter storage unit 2122 stores operation parameters such as a deceleration, a threshold speed, and the like. For example, the operation parameter storage unit 2122 is configured as a RAM or the like.

The motor speed predicting unit 2125 predicts the speed of the motor 40 based on a current value or the like output by the current detector 104. The motor speed predicting unit 2125 calculates torque generated in the motor 40 from the magnitude or the frequency of a current supplied to the motor 40 and converts the torque to a rotation speed of the motor 40. An encoder that is attached to a motor to output a rotation speed of the motor may be used. In this way, it is possible to know a more accurate speed of the motor and to improve the safety function.

The time monitoring unit 2126 measures the time elapsed after the emergency shutdown signal is received. The time monitoring unit 2126 outputs the elapsed time to the operation monitoring unit 2123 at a predetermined time interval.

The operation monitoring unit 2123 acquires the speed of the motor 40 and the elapsed time and monitors whether the speed or the elapsed time has reached predetermined thresholds. If the speed or the elapsed time has reached a predetermined threshold, the operation monitoring unit 2123 outputs a safe torque-off signal.

The flow of the process of the operation monitoring unit 2123 will be described with reference to Fig. 10.

First, when an emergency shutdown signal is output from the emergency shutdown unit and the signal is received by the operation monitoring unit 2123 of the safety function execution unit 212, operation parameters are acquired from the operation parameter storage unit 2122 (step S100). Subsequently, the operation monitoring unit 2123 outputs the acquired operation parameters to the deceleration instruction unit 214. After that, the deceleration instruction unit 214 determines whether a deceleration start signal has been received from the operation management unit 101. If the deceleration start signal has not been received (step S102: No), the deceleration instruction signal is output again (step S104). When a predetermined period has not elapsed after the emergency shutdown signal was received (step S105: No), the process returns to step S102 again. If the predetermined period has elapsed (step S105: Yes), it is determined that a certain error has occurred in the power conversion apparatus 10 and an STO signal is output (step S106).

When the deceleration start signal could be received after the deceleration instruction is output (step S102: Yes), the STO determination process is executed (step S103) . Moreover, when the STO determination process ends, the operation monitoring unit 2123 outputs an STO signal (step S106).

Here, a detailed flow of the STO determination process will be described with reference to Fig. 11.

First, in the STO determination process, the operation monitoring unit 2123 acquires operation parameters from the operation parameter storage unit 2122 (step S201). Here, the operation parameters are a deceleration, a threshold speed at which a safe torque-off signal is output, and the like, and the details thereof will be described with reference to Fig. 12.

Subsequently, confirmation is made on whether an initial speed of the motor has been acquired (step S202). When the initial speed has not been acquired (step S202: No), the speed of the motor is acquired (step S203) and the acquired speed is stored in the operation parameter storage unit 2122 as an initial speed of the motor (step S204). When the initial speed of the motor has been acquired (step S202: Yes), the speed of the motor and the time are acquired as they are (step S205), and the threshold of the motor speed is calculated (step S206). Moreover, it is determined whether the motor speed exceeds a threshold (step S207) . When the motor speed exceeds the threshold (step S207: Yes), the STO determination process ends and an STO signal is output (step S106 of Fig. 10). When the motor speed does not exceed the threshold (step S207: No), the flow returns to step S205 and the process is executed.

An operation of decelerating and stopping the motor will be described with reference to Fig. 12. This deceleration and stopping operation corresponds to SS1 (Safety Stop 1) defined in the functional safety standards IEC 61800-5-2.

In the graph of Fig. 12, the vertical axis represents a motor speed and the horizontal axis represents time. First, if an emergency shutdown signal is received at time T1 when the motor operates at a speed V0, deceleration of the motor starts. Moreover, when the speed is decelerated to a speed V1 (time T3), torque is turned off. After that, the motor stops by entering an uncontrolled state. Moreover, the upper limit and the lower limit of the deceleration may be set. For example, when the motor speed falls within an allowable range in which a dot line 603 is the upper limit and a dot line 604 is the lower limit, deceleration is continued as it is. If the motor speed exceeds this range, it is regarded that an abnormality has occurred and torque is turned off. A line 602 illustrates a change over time in the speed when the motor 40 has difficulty in decelerating. The line 602 crosses the dot line 603 showing the upper limit at time T2. Here, it is regarded that an abnormality has occurred and torque is turned off.

In this manner, it is possible to control deceleration of the motor more finely and the safety is improved.

Examples of the operation parameters stored in the operation parameter storage unit 2122 include the initial speed V0 of the motor, a speed V1 at which torque-off is executed, a lowest elapsed time dT2, a standard elapsed time dT3, and a largest elapsed time dT4 elapsed until torque-off is executed after an emergency shutdown signal is received, an increase dV2 and a decrease dV1 in the speed from the initial speed V0 of the motor, and a largest time dT1 elapsed until deceleration starts after the emergency shutdown signal is received. The operation parameters other than the initial speed V0 of the motor are set in advance from an external device.

Fig. 15 is a diagram illustrating a display example of an operation unit and a display unit mounted on the power conversion apparatus according to Embodiment 1. The operation unit and the display unit are not necessarily mounted on the power conversion apparatus but may be detachably attached to the power conversion apparatus via a cable or the like.

The power conversion apparatus 10 includes an interface such as an operation start button 701, an operation stop button 702, a display portion 703, an OK button 704, an UP button 705, and a DOWN button 706.

When an error occurs, a notice of an error is displayed on the display portion 703. For example, an error number "No. 001" and a content such as an error content "Coupling error" are displayed.

In this manner, by displaying the content of an error, the user can understand the reason why the motor 40 stopped and the usability is improved.

### [Embodiment 2]

The international standards IEC 61800-5-2 define safety functions such as a function (SLS: Safely-limited speed) of controlling a motor speed so as not to exceed a predetermined value and a function (SSM: Safe speed monitor) of outputting a safety output signal showing whether the motor speed is equal to or less than a predetermined value.

If the safety functions mentioned above can be executed when a safety request signal of requesting execution of the safety functions is input, it is possible to control the motor more safely.

In order to realize these safety functions, parameters showing the type of a safety function to be executed when the safety request signal is input are stored in the operation parameter storage unit 2122 of the safety function execution unit 212. Specifically, a variable on a program are prepared, and the safety function execution unit 212 performs control such that SS1 is executed if the variable value is 1 and SLS is executed if the variable value is 2. Furthermore, the operation parameters of the respective safety functions are stored in the operation parameter storage unit 2122.

The operation when SLS is executed will be described with reference to Fig. 13.

In the graph of Fig. 13, the vertical axis represents a motor speed and the horizontal axis represents time. A speed V0 is the speed of a motor during operation. Moreover, a speed V1 is a limit speed that prohibits the motor to operate thereabove.

First, if an SLS start signal is received at time T1 when the motor operates at the speed V0, deceleration of the motor starts.

Moreover, when the speed is decelerated to the speed V1, the motor speed is monitored so that the motor speed does not exceed the speed V1. When the motor speed is decelerated from the speed V0 to the speed V1, it is monitored whether the motor speed is decelerated at a predetermined deceleration. A dot line 803 shows an allowable range of the motor speed. It is determined that the motor speed is normal if the motor speed is slower than the dot line 803.

A line 801 illustrates a change in the speed of the motor 40. Speed control is performed normally and the motor speed is controlled so as not to exceed the limit speed V1.

A line 802 illustrates a change over time in the speed when an abnormality occurs in the speed control of the motor 40 and the speed exceeds the limit speed V1. The line 802 crosses the dot line 803 showing the limit speed V1 at time T4. Here, it is regarded that an abnormality has occurred and the safety function execution unit 212 transmits a torque-off signal to the power conversion apparatus 10 and stops the motor.

Examples of the operation parameters stored in the operation parameter storage unit 2122 include the initial speed V0 of the motor, an increase dV in the speed from the initial speed V0 of the motor, a largest time dT1 elapsed until deceleration starts after the SLS signal is received, and a largest time dT2 elapsed until the motor is decelerated to the limit speed V1 after the SLS signal is received. The operation parameters other than the initial speed V0 of the motor are set in advance from an external device.

The operation when SSM is executed will be described with reference to Fig. 14.

In the graph of Fig. 14, the vertical axis represents a motor speed and the horizontal axis represents time. A speed V0 is the speed of the motor during operation. Moreover, a speed V1 is a threshold of the motor speed at which a safe speed signal is output if the motor speed is equal to or less than the threshold speed.

Upon receiving an SSM start signal, the safety function execution unit 212 receives the speed of the motor 40.

Moreover, at time T1 in Fig. 14, when the speed of the motor 40 is equal to or less than the speed V1, the safety function execution unit 212 outputs a safe speed signal. The safe speed signal is transmitted to the operation management unit 101 via the communication units 210 and 110. The operation management unit 101 having received the safe speed signal displays a notice that the motor is operating at a safe speed on the display unit 111. For example, a message "Motor is operating within a safe speed range" is displayed.

Moreover, at time T2 in Fig. 14, when the speed of the motor 40 exceeds the speed V1, the safety function execution unit 212 outputs a safe speed excess signal. The safe speed excess signal is transmitted to the operation management unit 101 via the communication units 210 and 110. The operation management unit 101 having received the safe speed excess signal displays a notice that the motor speed exceeded the safe speed on the display unit 111. For example, a message "Motor speed exceeded safe speed" is displayed.

At time T3, when the speed of the motor 40 is equal to or less than the speed V1, a safe speed signal is output and a notice that the motor is operating at the safe speed is displayed on the display unit 111.

In this manner, it is possible to execute various safety functions and to control the motor more safely.

### [Embodiment 3]

When an operation parameter is not set after the power conversion apparatus 10 and the safety function unit 20 are activated, the fact that the operation parameter is not set is notified to the user and default setting (for example, STO) is performed.

For this, after activation, the safety function unit 20 checks the value of a variable showing the type of a safety function to be executed, stored in the operation parameter storage unit 2122.

When the value of this variable is a value (for example, 99) showing that the type is not set, it is determined that the type is not set and a signal showing the parameter is not set is output to the display unit 111 of the power conversion apparatus 10. The display unit 111 having received this signal displays, for instance, a message "Operation parameter is not set" to notify the user of the fact.

When the operation parameter is not set, the motor 40 may be controlled so as not to be activated for the sake of safety. By doing so, a danger that the motor performs an operation that is not intended by the user disappears and the safety is further improved.

### [Reference Signs List]

10 Power conversion apparatus
20 Safety function unit
30 Emergency shutdown unit
40 Motor
50 Load machine
101 Operation management unit
102 Main body control unit
103 Drive unit
104 Current detector
105, 106 Signal reception unit
107 STO self-diagnosis
108, 109 Option connection unit
110, 210 Communication unit
111 Display unit
207 STO self-diagnosis unit
208, 209 Main body connection unit
211, 221 Control unit
212, 222 Safety function execution unit
213, 223 MCU self-diagnosis unit
214, 224 Deceleration instruction unit
1032 Rectifier circuit unit
1033 DC smoothing circuit unit
1034 Inverter unit
1035 Gate drive unit

## Claims

1. A power conversion apparatus (10) comprising:
a drive unit (103) including an inverter (1034) configured to convert a direct current to an alternating current to supply electric power to a motor (40) and a gate drive unit (1035) configured to control the inverter; and
an option connection unit (108, 109) configured to output a first connection completion signal indicating whether a safety function unit (20) is connected with the power conversion apparatus (10), wherein the safety function unit (20) includes a main body connection unit (208, 209) configured to output a second connection completion signal indicating whether the safety function unit (20) is connected and to receive the first connection completion signal indicating whether the power conversion apparatus (10) is connected, **characterized in that**:
the first connection completion signal is received by a control unit (211) of the safety function unit (20) and the second connection completion signal is received by an operation management unit (101) of the power conversion apparatus (10), wherein when a reception of the first connection completion signal or the second connection completion signal fails, the gate drive unit (1035) receives an emergency shutdown signal transmitted by an emergency shutdown unit (30) so that the gate drive unit (1035) controls the inverter so as not to supply a voltage in order to decelerate the motor (40).

2. The power conversion apparatus (10) according to claim 1, further comprising:
- a main body control unit (102) configured to transmit to the gate drive unit (1035) a signal for controlling the inverter (1034); and
- a first communication unit (110) configured to receive from the safety function unit (20) a speed control signal for controlling the drive unit (103), wherein
when the first connection completion signal, output by the option connection unit (108, 109), indicates that the safety function unit (20) is connected with the power conversion apparatus (10), the first communication unit (110) receives the speed control signal indicating a motor speed from the safety function unit (20) and transmits the speed control signal to the main body control unit (102), and the main body control unit (102) indicates to the gate drive unit (1035) to output the inverter (1034) controlling signal for supplying a voltage for decelerating the motor (40) to the inverter (1034), based on the speed control signal.

3. The power conversion apparatus (10) according to claim 2, further comprising:
- a current detector (104) configured to detect a current flowing through the inverter (1034), wherein
when the first connection completion signal, output by the option connection unit (108, 109), indicates that the safety function unit (20) is connected with the power conversion apparatus (10), a value of the current flowing through the inverter (1034), which is detected by the current detector (104), is transmitted to the safety function unit (20), and
the gate drive unit (1035) receives a safe torque-off signal output by the safety function unit (20), based on the transmitted value of the current, and controls the inverter (1034) so as not to supply the voltage for driving the motor (40).

4. The power conversion apparatus (10) according to claim 3, wherein the operation management unit (101) is further configured to receive information, which shows whether the motor (40) is operating, from the main body control unit (102) and to receive the first connection completion signal, which indicates whether the safety function unit (20) is connected with the power conversion apparatus (10), from the option connection unit (108, 109), is configured to output information, which shows that the connection of the safety function unit (20) with the power conversion apparatus (10) is disconnected, to a display unit (111), when the first connection completion signal, which shows that the safety function unit (20) is connected, is lost during operation of the motor (40), and to instruct to the main body control unit (102) to stop the motor (40).

5. The power conversion apparatus (10) according to claim 3, wherein
information showing whether the motor (40) is operating is received from the main body control unit (102), and the second connection completion signal showing whether the safety function unit (20) is connected with the power conversion apparatus (10) is received from the option connection unit (108, 109), and when a signal showing that the safety function unit (20) is coupled during operation of the motor (40) is received, information showing that the safety function unit (20) is connected during operation of the motor (40) is output to a display unit (111).

6. A power conversion system including a power conversion apparatus (10) according to claim 1 and a safety function unit (20), wherein
the safety function unit (20) includes:
- a safety function execution unit (212, 222) configured to receive a value of the current of the inverter (1034) from the current detector (104) and to generate information for controlling the motor (40), based on the received value of the current; and
- a second communication unit (210) configured to transmit the information for controlling the motor (40), generated by the safety function execution unit (212, 222), to the power conversion apparatus (10).

7. A power conversion method comprising:
- allowing a gate drive unit (1035) to control an inverter (1034) in order to convert a direct current to an alternating current and to supply electric power to a motor (40);
- receiving a first connection completion signal from an option connection unit (108, 109), wherein the first connection completion signal indicates whether the option connection unit (108, 109) is connected with a safety function unit (20);
- outputting, by a main body connection unit (208, 209), a second connection completion signal, wherein the second connection completion signal indicates whether the safety function unit (20) is connected, and
- receiving the first connection completion signal indicating whether the power conversion apparatus (10) is connected,
**characterized by**:
- receiving, by a control unit (211) of the safety function unit (20), the first connection completion signal, and
- receiving, by an operation management unit (101) of the power conversion apparatus (10), the second connection completion signal, and when a reception of the first connection completion signal or the second connection completion signal fails, the gate drive unit (1035) receives an emergency shutdown signal transmitted by an emergency shutdown unit (30) for
- allowing the gate drive unit (1035) to control the inverter (1034) so as not to supply a voltage in order to decelerate the motor (40),

8. The power conversion method according to claim 7, further comprising:
allowing a first communication unit (110) to receive a speed control signal indicating a speed of the motor (40) from the safety function unit (20) when the first connection completion signal of the option connection unit (108, 109) indicates that the safety function unit (20) is connected with the option connection unit (108, 109);
transmitting the speed control signal to a main body control unit (102); and
allowing the main body control unit (102) to instruct to the gate drive unit (1035) to output to the inverter (1034) a signal for supplying a voltage for decelerating the motor (40), based on the speed control signal.

9. The power conversion method according to claim 8, further comprising:
transmitting a value of a current flowing through the inverter (1034), detected by a current detector (104), to the safety function unit (20) when the first connection completion signal of the option connection unit (108, 109) indicates that the safety function unit (20) is connected with the option connection unit (108, 109);
allowing the gate drive unit (1035) to receive a safe torque-off signal output by the safety function unit (20), based on the transmitted value of the current; and
allowing the gate drive unit (1035) to control the inverter (1034) so as not to supply a voltage for driving the motor (40).

10. The power conversion method according to claim 9, further comprising:
allowing an operation management unit (101) to receive information, which shows whether the motor (40) is operating, from the main body control unit (102) and to receive the first connection completion signal, which shows whether the safety function unit (20) is connected with the option connection unit (108, 109), from the option connection unit (108, 109); and
outputting to the display unit (111) information showing that connection of the option connection unit (108, 109) with the safety function unit (20) is disconnected when the first connection completion signal, which shows that the safety function unit (20) is connected, is lost during operation of the motor (40), and instructing to the main body control unit (102) to stop the motor (40).

11. The power conversion method according to claim 9, further comprising:
allowing the operation management unit (101) to receive information showing whether the motor (40) is operating from the main body control unit (102) and the first connection completion signal showing whether the safety function unit (20) is connected with the option connection unit (108, 109); and
outputting to a display unit (111) information showing that the safety function unit (20) is connected with the option connection unit (108, 109) during operation of the motor (40), when second connection completion signal showing that the safety function unit (20) is coupled during operation of the motor (40) is received.

## Patentansprüche

1. Leistungsumsetzungsvorrichtung (10), die Folgendes umfasst:
eine Ansteuereinheit (103), die einen Wechselrichter (1034), der konfiguriert ist, Gleichstrom in Wechselstrom umzusetzen, um elektrische Leistung an einen Motor (40) zu liefern, und eine Gate-Ansteuereinheit (1035), die konfiguriert ist, den Wechselrichter zu steuern, enthält; und
eine Optionsverbindungseinheit (108, 109), die konfiguriert ist, ein erstes Verbindungsabschlusssignal auszugeben, das anzeigt, ob eine Sicherheitsfunktionseinheit (20) mit der Leistungsumsetzungsvorrichtung (10) verbunden ist, wobei die Sicherheitsfunktionseinheit (20) eine Hauptkörperverbindungseinheit (208, 209) enthält, die konfiguriert ist, ein zweites Verbindungsabschlusssignal, das anzeigt, ob die Sicherheitsfunktionseinheit (20) verbunden ist, auszugeben und das erste Verbindungsabschlusssignal, das anzeigt, ob die Leistungsumsetzungsvorrichtung (10) verbunden ist, zu empfangen, **dadurch gekennzeichnet, dass**
das erste Verbindungsabschlusssignal durch eine Steuereinheit (211) der Sicherheitsfunktionseinheit (20) empfangen wird und das zweite Verbindungsabschlusssignal durch eine Betriebsmanagementeinheit (101) der Leistungsumsetzungsvorrichtung (10) empfangen wird, wobei dann, wenn ein Empfang des ersten Verbindungsabschlusssignals oder des zweiten Verbindungsabschlusssignals fehlerhaft ist, die Gate-Ansteuereinheit (1035) ein Notfallabschaltsignal empfängt, das durch eine Notfallabschalteinheit (30) derart gesendet wird, dass die Gate-Ansteuereinheit (1035) den Wechselrichter steuert, keine Spannung zu liefern, um den Motor (40) zu verzögern.

2. Leistungsumsetzungsvorrichtung (10) nach Anspruch 1, die ferner Folgendes umfasst:
- eine Hauptkörpersteuereinheit (102), die konfiguriert ist, ein Signal zum Steuern des Wechselrichters (1034) zur Gate-Ansteuereinheit (1035) zu senden; und
- eine erste Kommunikationseinheit (110), die konfiguriert ist, von der Sicherheitsfunktionseinheit (20) ein Drehzahlsteuersignal zum Steuern der Ansteuereinheit (103) zu empfangen, wobei
dann, wenn das erste Verbindungsabschlusssignal, das durch die Optionsverbindungseinheit (108, 109) ausgegeben wird, anzeigt, dass die Sicherheitsfunktionseinheit (20) mit der Leistungsumsetzungsvorrichtung (10) verbunden ist, die erste Kommunikationseinheit (110) das Drehzahlsteuersignal, das eine Motorgeschwindigkeit anzeigt, von der Sicherheitsfunktionseinheit (20) empfängt und das Drehzahlsteuersignal zur Hauptkörpersteuereinheit (102) sendet und die Hauptkörpersteuereinheit (102) der Gate-Ansteuereinheit (1035) anzeigt, auf der Grundlage des Drehzahlsteuersignals das Steuerungssignal des Wechselrichters (1034) zum Liefern einer Spannung zum Verzögern des Motors (40) zum Wechselrichter (1034) auszugeben.

3. Leistungsumsetzungsvorrichtung (10) nach Anspruch 2, die ferner Folgendes umfasst:
- einen Stromdetektor (104), der konfiguriert ist, einen Strom zu detektieren, der durch den Wechselrichter (1034) fließt, wobei
dann, wenn das erste Verbindungsabschlusssignal, das durch die Optionsverbindungseinheit (108, 109) ausgegeben wird, anzeigt, dass die Sicherheitsfunktionseinheit (20) mit der Leistungsumsetzungsvorrichtung (10) verbunden ist, ein Wert des durch den Wechselrichter (1034) fließenden Stroms, der durch den Stromdetektor (104) detektiert wird, zur Sicherheitsfunktionseinheit (20) gesendet wird, und
die Gate-Ansteuereinheit (1035) ein Sicherheitsdrehmomentausschaltsignal, das durch die Sicherheitsfunktionseinheit (20) ausgegeben wird, auf der Grundlage des gesendeten Werts des Stroms empfängt und den Wechselrichter (1034) steuert, die Spannung zum Ansteuern des Motors (40) nicht zu liefern.

4. Leistungsumsetzungsvorrichtung (10) nach Anspruch 3, wobei die Betriebsmanagementeinheit (101) ferner konfiguriert ist, Informationen, die zeigen, ob der Motor (40) arbeitet, von der Hauptkörpersteuereinheit (102) zu empfangen und das erste Verbindungsabschlusssignal, das anzeigt, ob die Sicherheitsfunktionseinheit (20) mit der Leistungsumsetzungsvorrichtung (10) verbunden ist, von der Optionsverbindungseinheit (108, 109) zu empfangen, und konfiguriert ist, Informationen, die zeigen, dass die Verbindung der Sicherheitsfunktionseinheit (20) mit der Leistungsumsetzungsvorrichtung (10) getrennt ist, zu einer Anzeigeeinheit (111) auszugeben, wenn das erste Verbindungsabschlusssignal, das zeigt, dass die Sicherheitsfunktionseinheit (20) verbunden ist, während des Betriebs des Motors (40) verlorengeht, und die Hauptkörpersteuereinheit (102) anzuweisen, den Motor (40) zu stoppen.

5. Leistungsumsetzungsvorrichtung (10) nach Anspruch 3, wobei
Informationen, die zeigen, ob der Motor (40) arbeitet, von der Hauptkörpersteuereinheit (102) empfangen werden und das zweite Verbindungsabschlusssignal, das zeigt, ob die Sicherheitsfunktionseinheit (20) mit der Leistungsumsetzungsvorrichtung (10) verbunden ist, von der Optionsverbindungseinheit (108, 109) empfangen wird und dann, wenn ein Signal, das zeigt, dass die Sicherheitsfunktionseinheit (20) während des Betriebs des Motors (40) gekoppelt ist, empfangen wird, Informationen, die zeigen, dass die Sicherheitsfunktionseinheit (20) während des Betriebs des Motors (40) verbunden ist, zu einer Anzeigeeinheit (111) ausgegeben werden.

6. Leistungsumsetzsystem, das eine Leistungsumsetzungsvorrichtung (10) nach Anspruch 1 und eine Sicherheitsfunktionseinheit (20) enthält, wobei
die Sicherheitsfunktionseinheit (20) Folgendes enthält:
- eine Sicherheitsfunktionsausführungseinheit (212, 222), die konfiguriert ist, einen Wert des Stroms des Wechselrichters (1034) vom Stromdetektor (104) zu empfangen und Informationen zum Steuern des Motors (40) auf der Grundlage des empfangenen Werts des Stroms zu erzeugen; und
- eine zweite Kommunikationseinheit (210), die konfiguriert ist, die Informationen zum Steuern des Motors (40), die durch die Sicherheitsfunktionsausführungseinheit (212, 222) erzeugt werden, zur Leistungsumsetzungsvorrichtung (10) zu senden.

7. Leistungsumsetzverfahren, das Folgendes umfasst:
- Ermöglichen, dass eine Gate-Ansteuereinheit (1035) einen Wechselrichter (1034) steuert, Gleichstrom in Wechselstrom umzusetzen und elektrische Leistung zu einem Motor (40) zu liefern;
- Empfangen eines ersten Verbindungsabschlusssignals von einer Optionsverbindungseinheit (108, 109), wobei das erste Verbindungsabschlusssignal anzeigt, ob die Optionsverbindungseinheit (108, 109) mit einer Sicherheitsfunktionseinheit (20) verbunden ist;
- Ausgeben durch eine Hauptkörperverbindungseinheit (208, 209) eines zweiten Verbindungsabschlusssignals, wobei das zweite Verbindungsabschlusssignal anzeigt, ob die Sicherheitsfunktionseinheit (20) verbunden ist, und
- Empfangen des ersten Verbindungsabschlusssignals, das anzeigt, ob die Leistungsumsetzungsvorrichtung (10) verbunden ist,
**gekennzeichnet durch**:
- Empfangen durch eine Steuereinheit (211) der Sicherheitsfunktionseinheit (20) des ersten Verbindungsabschlusssignals und
- Empfangen durch eine Betriebsmanagementeinheit (101) der Leistungsumsetzungsvorrichtung (10) des zweiten Verbindungsabschlusssignals und dann, wenn ein Empfang des ersten Verbindungsabschlusssignals oder des zweiten Verbindungsabschlusssignals fehlerhaft ist, Empfangen durch die Gate-Ansteuereinheit (1035) eines Notfallabschaltsignals, das durch eine Notfallabschalteinheit (30) gesendet wird, zum
- Ermöglichen, dass die Gate-Ansteuereinheit (1035) den Wechselrichter (1034) steuert, keine Spannung zu liefern, um den Motor (40) zu verzögern.

8. Leistungsumsetzverfahren nach Anspruch 7, das ferner Folgendes umfasst:
Ermöglichen, dass eine erste Kommunikationseinheit (110) ein Drehzahlsteuersignal, das eine Drehzahl des Motors (40) anzeigt, von der Sicherheitsfunktionseinheit (20) empfängt, wenn das erste Verbindungsabschlusssignal der Optionsverbindungseinheit (108, 109) anzeigt, dass die Sicherheitsfunktionseinheit (20) mit der Optionsverbindungseinheit (108, 109) verbunden ist;
Senden des Drehzahlsteuersignals zu einer Hauptkörpersteuereinheit (102) und
Ermöglichen, dass die Hauptkörpersteuereinheit (102) die Gate-Ansteuereinheit (1035) anweist, auf der Grundlage des Drehzahlsteuersignals ein Signal zum Liefern einer Spannung zum Verzögern des Motors (40) zum Wechselrichter (1034) auszugeben.

9. Leistungsumsetzverfahren nach Anspruch 8, das ferner Folgendes umfasst:
Senden eines Werts eines durch den Wechselrichter (1034) fließenden Stroms, der durch einen Stromdetektor (104) detektiert wird, zur Sicherheitsfunktionseinheit (20), wenn das erste Verbindungsabschlusssignal der Optionsverbindungseinheit (108, 109) anzeigt, dass die Sicherheitsfunktionseinheit (20) mit der Optionsverbindungseinheit (108, 109) verbunden ist;
Ermöglichen, dass die Gate-Ansteuereinheit (1035) ein Sicherheitsdrehmomentausschaltsignal, das durch die Sicherheitsfunktionseinheit (20) ausgegeben wird, auf der Grundlage des gesendeten Werts des Stroms empfängt; und
Ermöglichen, dass die Gate-Ansteuereinheit (1035) den Wechselrichter (1034) steuert, keine Spannung zum Ansteuern des Motors (40) zu liefern.

10. Leistungsumsetzverfahren nach Anspruch 9, das ferner Folgendes umfasst:
Ermöglichen, dass eine Betriebsmanagementeinheit (101) Informationen, die zeigen, ob der Motor (40) arbeitet, von der Hauptkörpersteuereinheit (102) empfängt und das erste Verbindungsabschlusssignal, das zeigt, ob die Sicherheitsfunktionseinheit (20) mit der Optionsverbindungseinheit (108, 109) verbunden ist, von der Optionsverbindungseinheit (108, 109) empfängt; und
Ausgeben von Informationen, die zeigen, dass die Verbindung der Optionsverbindungseinheit (108, 109) mit der Sicherheitsfunktionseinheit (20) getrennt ist, zur Anzeigeeinheit (111), wenn das erste Verbindungsabschlusssignal, das zeigt, dass die Sicherheitsfunktionseinheit (20) verbunden ist, während des Betriebs des Motors (40) verlorengeht, und Anweisen der Hauptkörpersteuereinheit (102), den Motor (40) zu stoppen.

11. Leistungsumsetzverfahren nach Anspruch 9, das ferner Folgendes umfasst:
Ermöglichen, dass die Betriebsmanagementeinheit (101) Informationen, die zeigen, ob der Motor (40) arbeitet, von der Hauptkörpersteuereinheit (102) und das erste Verbindungsabschlusssignal, das zeigt, ob die Sicherheitsfunktionseinheit (20) mit der Optionsverbindungseinheit (108, 109) verbunden ist, empfängt; und
Ausgeben zu einer Anzeigeeinheit (111) von Informationen, die zeigen, dass die Sicherheitsfunktionseinheit (20) während des Betriebs des Motors (40) mit der Optionsverbindungseinheit (108, 109) verbunden ist, wenn ein zweites Verbindungsabschlusssignal empfangen wird, das zeigt, dass die Sicherheitsfunktionseinheit (20) während des Betriebs des Motors (40) gekoppelt ist.

## Revendications

1. Appareil de conversion de puissance (10) comprenant :
une unité pilote (103) incluant un onduleur (1034) configuré pour convertir un courant direct en un courant alternatif pour alimenter une puissance électrique à un moteur (40) et une unité pilote de grille (1035) configurée pour commander l'onduleur ; et
une unité de connexion d'option (108, 109) configurée pour sortir un premier signal d'achèvement de connexion indiquant si une unité à fonction de sécurité (20) est connectée à l'appareil de conversion de puissance (10), l'unité à fonction de sécurité (20) incluant une unité de connexion de corps principal (208, 209) configurée pour sortir un second signal d'achèvement de connexion indiquant si l'unité à fonction de sécurité (20) est connectée et pour recevoir le premier signal d'achèvement de connexion indiquant si l'appareil de conversion de puissance (10) est connecté,
**caractérisé en ce que** :
le premier signal d'achèvement de connexion est reçu par une unité de commande (211) de l'unité à fonction de sécurité (20) et le second signal d'achèvement de connexion est reçu par une unité de gestion de fonctionnement (101) de l'appareil de conversion de puissance (10), dans lequel, quand une réception du premier signal d'achèvement de connexion ou du second signal d'achèvement de connexion échoue, l'unité pilote de grille (1035) reçoit un signal d'interruption d'urgence transmis par une unité d'interruption d'urgence (30) de telle sorte que l'unité pilote de grille (1035) commande l'onduleur de telle sorte qu'il n'alimente pas une tension afin de décélérer le moteur (40).

2. Appareil de conversion de puissance (10) selon la revendication 1, comprenant en outre :
- une unité de commande de corps principal (102) configurée pour transmettre à l'unité pilote de grille (1035) un signal destiné à commander l'onduleur (1034) ; et
- une première unité de communication (110) configurée pour recevoir, depuis l'unité à fonction de sécurité (20), un signal de commande de vitesse destiné à commander l'unité pilote (103), dans lequel
quand le premier signal d'achèvement de connexion, sorti par l'unité de connexion d'option (108, 109), indique que l'unité à fonction de sécurité (20) est connectée à l'appareil de conversion de puissance (10), la première unité de communication (110) reçoit le signal de commande de vitesse indiquant une vitesse de moteur depuis l'unité à fonction de sécurité (20) et transmet le signal de commande de vitesse à l'unité de commande de corps principal (102), et l'unité de commande de corps principal (102) indique à l'unité pilote de grille (1035) de sortir le signal de commande d'onduleur (1034) pour alimenter une tension destinée à décélérer le moteur (40) vers l'onduleur (1034), sur la base du signal de commande de vitesse.

3. Appareil de conversion de puissance (10) selon la revendication 2, comprenant en outre :
- un détecteur de courant (104) configuré pour détecter un courant s'écoulant à travers l'onduleur (1034), dans lequel
quand le premier signal d'achèvement de connexion, sorti par l'unité de connexion d'option (108, 109), indique que l'unité à fonction de sécurité (20) est connectée à l'appareil de conversion de puissance (10), une valeur du courant s'écoulant à travers l'onduleur (1034), qui est détecté par le détecteur de courant (104), est transmise à l'unité à fonction de sécurité (20), et
l'unité pilote de grille (1035) reçoit un signal d'arrêt de couple de sécurité sorti par l'unité à fonction de sécurité (20), sur la base de la valeur transmise du courant, et commande l'onduleur (1034) de sorte qu'il n'alimente pas la tension pour piloter le moteur (40).

4. Appareil de conversion de puissance (10) selon la revendication 3, dans lequel l'unité de gestion de fonctionnement (101) est en outre configurée pour recevoir des informations, qui indiquent si le moteur (40) est en fonctionnement, depuis l'unité de commande de corps principal (102), et pour recevoir le premier signal d'achèvement de connexion, qui indique si l'unité à fonction de sécurité (20) est connectée à l'appareil de conversion de puissance (10), depuis l'unité de connexion d'option (108, 109), est configurée pour sortir des informations, qui indiquent que la connexion de l'unité à fonction de sécurité (20) avec l'appareil de conversion de puissance (10) est déconnectée, vers une unité d'affichage (111), quand le premier signal d'achèvement de connexion, qui indique que l'unité à fonction de sécurité (20) est connectée, est perdu pendant un fonctionnement du moteur (40), et pour donner instruction à l'unité de commande de corps principal (102) d'arrêter le moteur (40).

5. Appareil de conversion de puissance (10) selon la revendication 3, dans lequel
des informations indiquant si le moteur (40) est en fonctionnement sont reçues depuis l'unité de commande de corps principal (102), et le second signal d'achèvement de connexion indiquant si l'unité à fonction de sécurité (20) est connectée à l'appareil de conversion de puissance (10), est reçu depuis l'unité de connexion d'option (108, 109), et quand un signal indiquant que l'unité à fonction de sécurité (20) est couplée pendant un fonctionnement du moteur (40) est reçu, des informations indiquant que l'unité à fonction de sécurité (20) est connectée pendant un fonctionnement du moteur (40) sont sorties vers une unité d'affichage (111).

6. Système de conversion de puissance incluant un appareil de conversion de puissance (10) selon la revendication 1 et une unité à fonction de sécurité (20), dans lequel
l'unité à fonction de sécurité (20) inclut :
- une unité d'exécution à fonction de sécurité (212, 222) configurée pour recevoir une valeur du courant de l'onduleur (1034) depuis le détecteur de courant (104) et pour générer des informations destinées à commander le moteur (40), sur la base de la valeur reçue du courant ; et
- une seconde unité de communication (210) configurée pour transmettre les informations destinées à commander le moteur (40), générées par l'unité d'exécution à fonction de sécurité (212, 222), à l'appareil de conversion de puissance (10).

7. Procédé de conversion de puissance comprenant les étapes consistant à :
- permettre à une unité pilote de grille (1035) de commander un onduleur (1034) pour qu'il convertisse un courant direct en un courant alternatif et pour qu'il alimente une puissance électrique à un moteur (40) ;
- recevoir un premier signal d'achèvement de connexion depuis une unité de connexion d'option (108, 109), le premier signal d'achèvement de connexion indiquant si l'unité de connexion d'option (108, 109) est connectée à une unité à fonction de sécurité (20) ;
- sortir, via une unité de connexion de corps principal (208, 209), un second signal d'achèvement de connexion, le second signal d'achèvement de connexion indiquant si l'unité à fonction de sécurité (20) est connectée, et
- recevoir le premier signal d'achèvement de connexion indiquant si l'appareil de conversion de puissance (10) est connecté,
**caractérisé par** les étapes consistant à :
- recevoir, via une unité de commande (211) de l'unité à fonction de sécurité (20), le premier signal d'achèvement de connexion, et
- recevoir, via une unité de gestion de fonctionnement (101) l'appareil de conversion de puissance (10), le second signal d'achèvement de connexion, et quand une réception du premier signal d'achèvement de connexion ou du second signal d'achèvement de connexion échoue, l'unité pilote de grille (1035) reçoit un signal d'interruption d'urgence transmis par une unité d'interruption d'urgence (30) pour
- permettre à l'unité pilote de grille (1035) de commander l'onduleur (1034) pour qu'il n'alimente pas une tension afin de décélérer le moteur (40).

8. Procédé de conversion de puissance selon la revendication 7, comprenant en outre les étapes consistant à :
permettre à une première unité de communication (110) de recevoir un signal de commande de vitesse indiquant une vitesse du moteur (40) depuis l'unité à fonction de sécurité (20) quand le premier signal d'achèvement de connexion de l'unité de connexion d'option (108, 109) indique que l'unité à fonction de sécurité (20) est connectée à l'unité de connexion d'option (108, 109) ;
transmettre le signal de commande de vitesse à une unité de commande de corps principal (102) ; et
permettre à l'unité de commande de corps principal (102) de donner instruction à l'unité pilote de grille (1035) de sortir vers l'onduleur (1034) un signal destiné à alimenter une tension pour décélérer le moteur (40), sur la base du signal de commande de vitesse.

9. Procédé de conversion de puissance selon la revendication 8, comprenant en outre les étapes consistant à :
transmettre une valeur d'un courant s'écoulant à travers l'onduleur (1034), détecté par le détecteur de courant (104), à l'unité à fonction de sécurité (20) quand le premier signal d'achèvement de connexion de l'unité de connexion d'option (108, 109) indique que l'unité à fonction de sécurité (20) est connectée à l'unité de connexion d'option (108, 109) ;
permettre à l'unité pilote de grille (1035) de recevoir un signal d'arrêt de couple de sécurité sorti par l'unité à fonction de sécurité (20), sur la base de la valeur transmise du courant ; et
permettre à l'unité pilote de grille (1035) de commander l'onduleur (1034) de sorte qu'il n'alimente pas une tension pour piloter le moteur (40).

10. Procédé de conversion de puissance selon la revendication 9, comprenant en outre les étapes consistant à :
permettre à une unité de gestion de fonctionnement (101) de recevoir des informations, qui indiquent si le moteur (40) est en fonctionnement, depuis l'unité de commande de corps principal (102), et de recevoir le premier signal d'achèvement de connexion, qui indique si l'unité à fonction de sécurité (20) est connectée à l'unité de connexion d'option (108, 109), depuis l'unité de connexion d'option (108, 109) ; et
sortir vers l'unité d'affichage (111) des informations, qui indiquent que la connexion de l'unité de connexion d'option (108, 109) avec l'unité à fonction de sécurité (20) est déconnectée quand le premier signal d'achèvement de connexion, qui indique que l'unité à fonction de sécurité (20) est connectée, est perdu pendant un fonctionnement du moteur (40), et donner instruction à l'unité de commande de corps principal (102) d'arrêter le moteur (40).

11. Procédé de conversion de puissance selon la revendication 9, comprenant en outre les étapes consistant à :
permettre à l'unité de gestion de fonctionnement (101) de recevoir des informations indiquant si le moteur (40) est en fonctionnement depuis l'unité de commande de corps principal (102) et le premier signal d'achèvement de connexion indiquant si l'unité à fonction de sécurité (20) est connectée à l'unité de connexion d'option (108, 109) ; et
sortir vers une unité d'affichage (111) des informations indiquant que l'unité à fonction de sécurité (20) est connectée à l'unité de connexion d'option (108, 109) pendant un fonctionnement du moteur (40) quand un second signal d'achèvement de connexion, indiquant que l'unité à fonction de sécurité (20) est couplée pendant un fonctionnement du moteur (40) est reçu.
